# EUROPEAN PATENT APPLICATION

(11) **EP 4 024 315 A1**
(43) Date of publication of application: **06.07.2022**
(21) Application number: 20855908.8
(22) Date of filing: 28.08.2020
(51) Int. Cl.: G06Q 30/06

(54) **COMMODITY EXCHANGE SYSTEM, COMMODITY EXCHANGE METHOD, AND COMMODITY EXCHANGE PROGRAM**

(30) Priority: 30.08.2019 JP 2019158273
(71) Applicant: Nerai Corporation, Sabae-shi Fukui 916-0026 (JP); CONNECTFREE CORPORATION, Kyoto-shi, Kyoto 600-8009 (JP); Tate, Kristopher Andrew, Shimogyo-ku Kyoto-shi Kyoto 600-8009 (JP)
(72) Inventor: TATE, Kristopher Andrew, Kyoto-shi, Kyoto 600-8009 (JP)
(74) Representative: Boult Wade Tennant LLP
(86) International application number: PCT/JP2020/032698
(87) International publication number: WO 2021/040000

(57) **Abstract**

A platform that enables direct transactions of products between producers and purchasers is provided. A product transaction system for conducting a product transaction between a purchaser and a supplier is provided. The product transaction system includes: a first receiving means for receiving a purchase request including a suggested purchase price of a specific product from the purchaser; a second receiving means for receiving a sales request including a suggested sales price of the specific product from the supplier; and a determination means for determining whether or not the purchase request and the sales request match each other after reflecting a shipping cost for delivering the specific product from the supplier to the purchaser.

## Description

### TECHNICAL FIELD

The present disclosure relates to a product transaction system, a product transaction method, and a product transaction program for conducting product transactions between purchasers and suppliers.

### BACKGROUND ART

In a conventional distribution system, a product is delivered from a producer to a purchaser by retail. For such a distribution system, for example, JP 2019-128814 A (Patent Document 1) discloses an electronic trading system capable of activating the market.

### CITATION LIST

### PATENT DOCUMENT

Patent Document 1: JP 2019-128814 A

### SUMMARY OF THE INVENTION

### PROBLEM TO BE SOLVED BY THE INVENTION

The electronic trading system disclosed in Patent Document 1 described above supports the purchasing and selling of products between purchasers and sellers, but does not realize, for example, a direct transaction between a producer who manufactures an industrial product and a purchaser of the industrial product.

It is an object of the present disclosure to provide a platform that enables direct transactions of products between producers and purchasers.

### MEANS FOR SOLVING PROBLEM

According to an aspect of the present disclosure, a product transaction system for conducting a product transaction between a purchaser and a supplier is provided. The product transaction system includes: a first receiving means for receiving a purchase request including a suggested purchase price of a specific product from the purchaser; a second receiving means for receiving a sales request including a suggested sales price of the specific product from the supplier; and a determination means for determining whether or not the purchase request and the sales request match each other after reflecting a shipping cost for delivering the specific product from the supplier to the purchaser.

The product transaction system may further include a request queue for temporarily storing the one or more purchase requests and the one or more sales requests. The determination means may determine whether or not the purchase request and the sales request match each other when the purchase request or the sales request is added to the request queue or when the purchase request or the sales request stored in the request queue is changed.

The product transaction system may further include a calculation means for calculating a shipping cost for delivering the specific product based on a shipping cost definition associated with the supplier or the specific product and a distance between the purchaser and the supplier.

The product transaction system may further include an account for managing an economic value held by each of the purchaser and the supplier. The first receiving means may reserve a value determined based on a suggested purchase price included in the purchase request from a corresponding purchaser's account.

The product transaction system may further include a means for collecting a usage fee from the purchaser's account corresponding to the purchase request when a product transaction based on the purchase request and the sales request matching each other is completed.

According to another aspect of the present disclosure, a product transaction method in which a computer executes a product transaction between a purchaser and a supplier is provided. The product transaction method includes: a step of receiving a purchase request including a suggested purchase price of a specific product from the purchaser; a step of receiving a sales request including a suggested sales price of the specific product from the supplier; and a step of determining whether or not the purchase request and the sales request match each other after reflecting a shipping cost for delivering the specific product from the supplier to the purchaser.

According to still another aspect of the present disclosure, a product transaction program for causing a computer to execute a product transaction between a purchaser and a supplier is provided. The product transaction program causes the computer to execute: a step of receiving a purchase request including a suggested purchase price of a specific product from the purchaser; a step of receiving a sales request including a suggested sales price of the specific product from the supplier; and a step of determining whether or not the purchase request and the sales request match each other after reflecting a shipping cost for delivering the specific product from the supplier to the purchaser.

### EFFECT OF THE INVENTION

According to the present disclosure, it is possible to realize a platform that enables direct transactions of products between producers and purchasers.

### BRIEF DESCRIPTION OF DRAWINGS

Fig. 1 is a diagram for explaining an overview of processing in a product transaction system according to the present embodiment;
Fig. 2 is a diagram for explaining an example of a processing procedure in the product transaction system according to the present embodiment;
Fig. 3 is a schematic diagram showing a configuration example of a management server that configures the product transaction system according to the present embodiment;
Fig. 4 is a schematic diagram showing a main part of matching processing in the product transaction system according to the present embodiment;
Fig. 5 is a schematic diagram showing an example of a user interface screen provided on a terminal of a purchaser that configures the product transaction system according to the present embodiment;
Fig. 6 is a schematic diagram showing an example of a user interface screen provided on a terminal of a supplier that configures the product transaction system according to the present embodiment;
Fig. 7 is a schematic diagram showing an example of a user interface screen provided on a terminal of a purchaser that configures the product transaction system according to the present embodiment;
Fig. 8 is a diagram for explaining a method of managing information regarding a purchaser by the management server of the product transaction system according to the present embodiment;
Fig. 9 is a diagram for explaining a method of managing information regarding a supplier by the management server of the product transaction system according to the present embodiment;
Fig. 10 is a diagram showing an example of a shipping cost definition used in the product transaction system according to the present embodiment;
Fig. 11 is a diagram showing another example of the shipping cost definition used in the product transaction system according to the present embodiment;
Fig. 12 is a flowchart showing a processing procedure in the management server of the product transaction system according to the present embodiment;
Fig. 13 is a flowchart showing a processing procedure in the management server of the product transaction system according to the present embodiment;
Fig. 14 is a schematic diagram showing another example of a user interface screen provided on a terminal of a purchaser that configures the product transaction system according to the present embodiment; and
Fig. 15 is a schematic diagram showing another example of a user interface screen provided on a terminal of a supplier that configures the product transaction system according to the present embodiment.

### MODE(S) FOR CARRYING OUT THE INVENTION

An embodiment according to the present disclosure will be described in detail with reference to the diagrams. In addition, the same or corresponding portions in the diagrams are denoted by the same reference numerals, and the description thereof will not be repeated.

### <A. Product transaction system 1>

First, a product transaction system 1 according to the present embodiment will be described. The product transaction system 1 provides a platform that enables direct transactions of products between producers and purchasers.

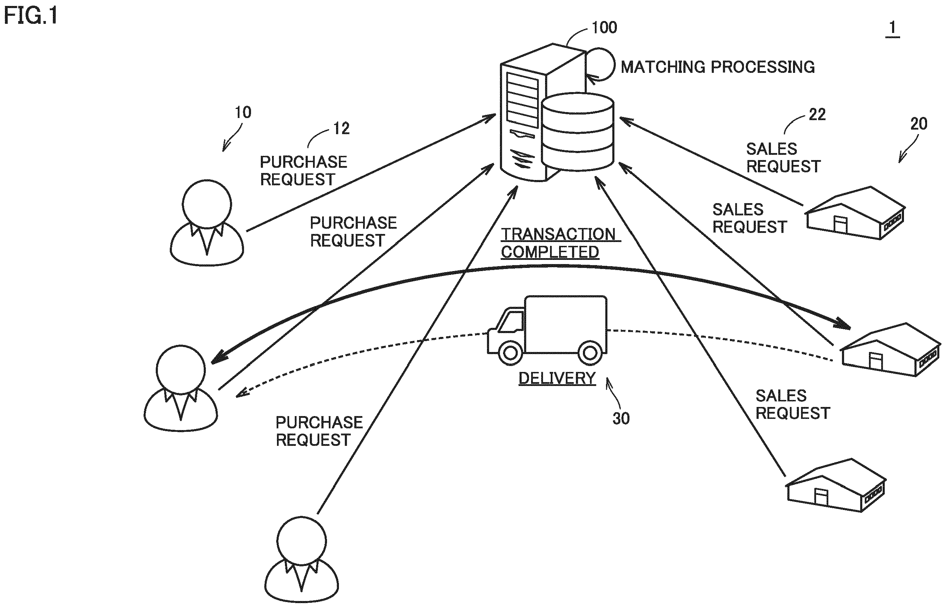

Fig. 1 is a diagram for explaining an overview of processing in the product transaction system 1 according to the present embodiment. Referring to Fig. 1, the product transaction system 1 includes a management server 100 that can be accessed from either one or more purchasers 10 who desire to purchase any product and one or more suppliers 20 who desire to provide any product. That is, the product transaction system 1 electronically performs a product transaction between the purchaser 10 and the supplier 20.

Each of the purchasers 10 transmits to the management server 100 information for specifying any product to be purchased and the number of products and a purchase request 12 including a suggested purchase price. In addition, each of the suppliers 20 transmits to the management server 100 information for specifying any product to be sold and the number of products and a sales request 22 including a suggested sales price.

The management server 100 compares the purchase request 12 from one or more purchasers 10 with the sales request 22 from one or more suppliers 20 to determine whether or not the purchase request 12 and the sales request 22 match each other (hereinafter, also referred to as "matching processing"). Then, when the purchase request 12 and the sales request 22 match each other, it is determined that the transaction is completed.

The management server 100 notifies the supplier 20 corresponding to the sales request 22, for which it is determined that the transaction is completed, that the transaction is completed, and delivers a product as a transaction target to the purchaser 10. In addition, the delivery of the product may be carried out by the supplier 20 itself, but typically, any deliverer 30 may carry out the delivery.

The management server 100 is also in charge of payment processing between the purchaser 10 and the supplier 20, as will be described later.

The products handled in the product transaction system 1 are not particularly limited, but those expected to be repeatedly purchased, such as daily necessities or consumables, are preferable.

The purchaser 10 is typically assumed to be an individual who ultimately uses the target product, but is not limited thereto. For example, the purchaser 10 may be a store or an office where the product is planned to be used continuously. In addition, the purchaser 10 may be a computer or a device having a computation function. As described above, the purchaser 10 is a concept including any entity capable of making any decision regarding the transaction of products.

The supplier 20 may be any entity as long as the entity can provide any product, but typically a producer or an importer of any product is preferable. Alternatively, the supplier 20 may be a logistics company that stores or manages any product. In addition, the supplier 20 may be a computer or a device having a computation function. As described above, the supplier 20 is a concept including any entity capable of making any decision regarding the transaction of products, similar to the purchaser 10.

Thus, the product transaction system 1 according to the present embodiment provides a platform that enables direct transactions of products between producers and purchasers, which did not exist in the conventional business model.

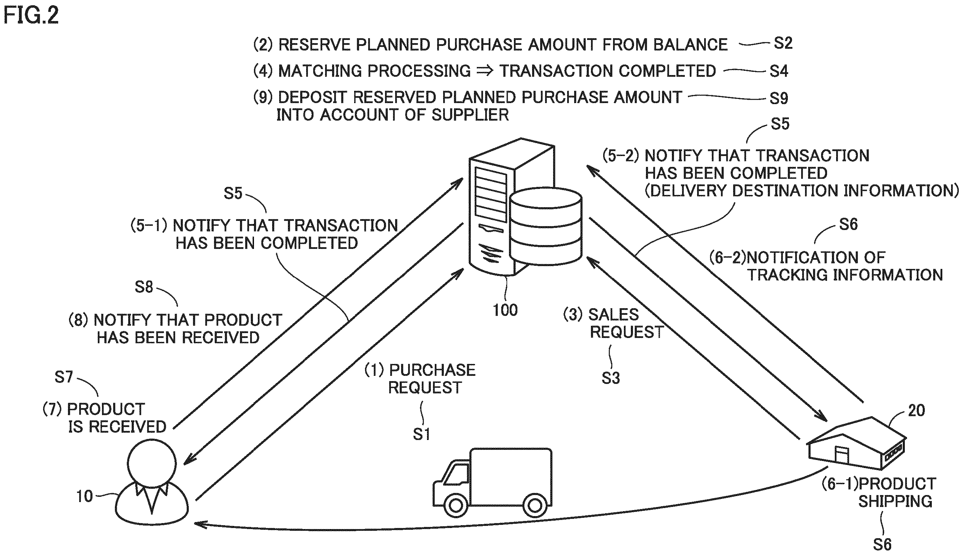

Fig. 2 is a diagram for explaining an example of a processing procedure in the product transaction system 1 according to the present embodiment. Fig. 2 shows a processing example when the purchaser 10 orders a specific product, a transaction between the purchaser 10 and the arbitrary supplier 20 is completed, and the product is provided by the supplier 20.

Referring to Fig. 2, when the purchaser 10 performs an operation for ordering a specific product, the purchase request 12 is transmitted to the management server 100 (step S1). The management server 100 receives the purchase request 12 including the suggested purchase price of the specific product from the purchaser 10. Then, the management server 100 reserves a planned purchase amount, which is determined based on the suggested purchase price and the suggested purchase quantity included in the purchase request 12 from the purchaser 10, from the balance of the purchaser 10 (step S2).

On the other hand, when the supplier 20 performs an operation for selling a specific product, the sales request is transmitted to the management server 100 (step S3). The management server 100 receives the sales request 22 including the suggested sales price of the specific product from the supplier 20.

The management server 100 executes matching processing between the purchase request 12 from the purchaser 10 and the sales request 22 from the supplier 20 (step S4). In this matching processing, when the transaction between the purchase request 12 from any purchaser 10 and the sales request 22 from any supplier 20 is completed, the management server 100 transmits a notification of the completion of the transaction to the purchaser 10 and the supplier 20 (step S5).

Upon receiving the notification of the completion of the transaction, the supplier 20 ships the product as a transaction target (step S6). In addition, with the shipment of the product, the supplier 20 transmits tracking information for tracking the shipped product to the purchaser 10 through the management server 100. By sharing the tracking information among the purchaser 10, the supplier 20, and the management server 100, it is possible to guarantee that the product is delivered reliably.

When the purchaser 10 receives the product from the supplier 20 (step S7), the purchaser 10 transmits a product receipt notification to the management server 100 (step S8). Upon receiving the product receipt notification from the purchaser 10, the management server 100 deposits the planned purchase amount reserved in advance into the account of the supplier 20 (step S9).

By the processing procedure described above, the transaction of the product in the product transaction system 1 is completed.

Hereinafter, details of the configuration, functions, and processing of the product transaction system 1 according to the present embodiment will be described.

### <B. Hardware configuration>

Next, an example of the hardware configuration of the product transaction system 1 according to the present embodiment will be described.

### (b1: Management server 100)

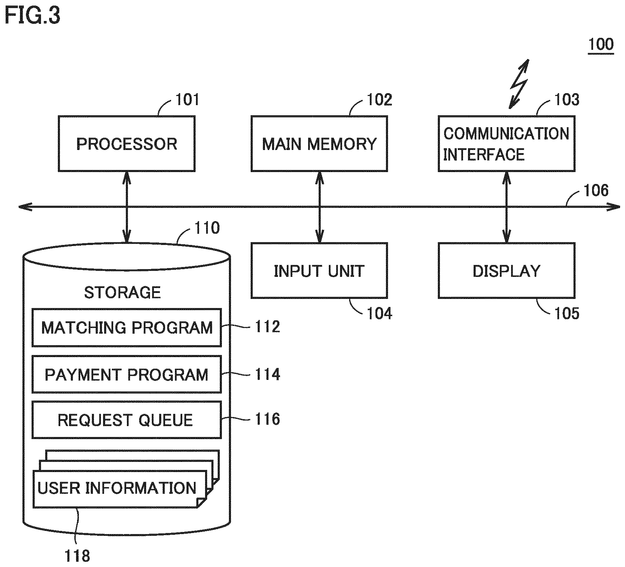

Fig. 3 is a schematic diagram showing a configuration example of the management server 100 configuring the product transaction system 1 according to the present embodiment. Typically, the management server 100 is realized by using one or more general-purpose computers.

Referring to Fig. 3, the management server 100 includes one or more processors 101, a main memory 102, a communication interface 103, an input unit 104, a display 105, and a storage 110 as main components. These components are connected to each other through an internal bus 106.

The processor 101 may be, for example, a CPU or a GPU (Graphics Processing Unit). A plurality of processors 101 may be arranged, or the processor 101 having a plurality of cores may be adopted.

The main memory 102 is a volatile storage device, such as a DRAM (Dynamic Random Access Memory) or an SRAM (Static Random Access Memory). The storage 110 is a nonvolatile storage device, such as a hard disk or an SSD (Solid State Drive), and stores various programs or various kinds of data to be executed by the processor 101. Among the programs stored in the storage 110, a designated program code is loaded to the main memory 102, and the processor 101 sequentially executes computer-readable instructions included in the program code loaded to the main memory 102 to realize various functions described later.

Typically, the storage 110 stores a matching program 112 for realizing matching processing, a payment program 114 for realizing payment processing, a request queue 116, and user information 118 including various kinds of information regarding the purchaser 10 and the supplier 20. The request queue 116 temporarily stores one or more purchase requests 12 from one or more purchasers 10 and one or more sales requests 22 from one or more suppliers 20.

The matching program 112 and the payment program 114 correspond to a product transaction program for causing a computer to execute a product transaction between the purchaser 10 and the supplier 20.

The communication interface 103 is in charge of data exchange with the terminals of the purchaser 10 and the supplier 20 and the like. The communication interface 103 may include, for example, an Ethernet (registered trademark) port for communication over the Internet.

The input unit 104 receives an arbitrary input instruction. The display 105 displays the processing result of the processor 101 and the like.

The entirety or part of the management server 100 may be realized by using a hard-wired circuit such as an ASIC (Application Specific Integrated Circuit) in which a circuit corresponding to computer-readable instructions is provided. Alternatively, the entirety or part of the management server 100 may be realized by using a circuit corresponding to computer-readable instructions on an FPGA (field-programmable gate array). In addition, the entirety or part of the management server 100 may be realized by appropriately combining the processor 101, a main memory, an ASIC, an FPGA, and the like.

The management server 100 may further include a component for reading the stored program or the like from the non-transitory medium that stores the matching program 112 and the payment program 114 that are computer-readable instructions. The medium may be, for example, an optical medium, such as a DVD (Digital Versatile Disc), or a semiconductor medium, such as a USB memory.

In addition, the matching program 112 and the payment program 114 may not only be installed on the management server 100 through the medium, but also be provided from a distribution server on the network.

### (b2: Terminals of purchaser 10 and supplier 20)

The purchaser 10 and the supplier 20 can use the product transaction system 1 by using any terminal. The terminals used by the purchaser 10 and the supplier 20 include any information processing device, such as a personal computer, a smartphone, a tablet, and a mobile phone.

The functions provided for the purchaser 10 and the supplier 20, which will be described later, may be realized by an application pre-installed in the terminal, or the user interface provided by the management server 100 may be used through the browser of the terminal.

Various functions including the user interface provided for the purchaser 10 and the supplier 20 may be realized by using any hardware configuration and software configuration.

### <C. Matching processing>

Next, the matching processing in the product transaction system 1 according to the present embodiment will be described.

### (c1: Purchase request 12 and sales request 22)

In the product transaction system 1 according to the present embodiment, the matching processing may be performed in consideration of the shipping cost required for delivering the product from the supplier 20 to the purchaser 10. That is, the management server 100 of the product transaction system 1 determines whether or not the purchase request 12 and the sales request 22 match after reflecting the shipping cost for delivering a specific product from the supplier 20 to the purchaser 10. In considering the shipping cost, the distance between the purchaser 10 and the supplier 20 may be considered.

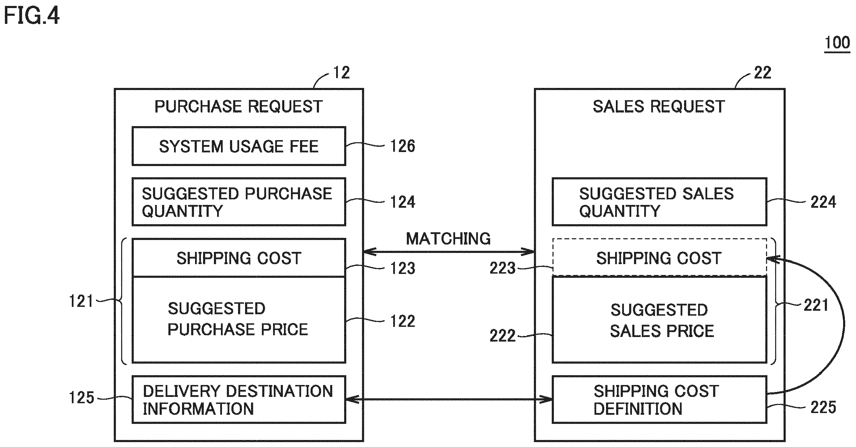

Fig. 4 is a schematic diagram showing a main part of the matching processing in the product transaction system 1 according to the present embodiment.

Referring to Fig. 4, the purchase request 12 from the purchaser 10 includes a suggested total purchase amount 121 including a suggested purchase price 122 and a shipping cost 123, a suggested purchase quantity 124, and delivery destination information 125. The purchase request 12 may further include a system usage fee 126. The system usage fee 126 is a usage fee for the purchaser 10 to use the product transaction system 1, and typically, the amount obtained by multiplying the suggested purchase price 122 or the suggested total purchase amount 121 by a predetermined rate (for example, 1.0%) may be automatically calculated.

That is, when the product transaction based on the purchase request 12 and the sales request 22 matching each other is completed, the management server 100 may collect the system usage fee 126 from the account of the purchaser 10 corresponding to the purchase request 12.

In addition, the shipping cost 123 may be calculated for each product or may be calculated collectively for a plurality of products. In addition, the delivery destination information 125 does not necessarily have to be included in the purchase request 12, and the user information 118 stored in advance in the management server 100 may be used.

When the purchaser 10 desires to purchase a specific product, the purchaser 10 specifies the suggested purchase price 122 in addition to the suggested purchase quantity 124, or specifies the suggested total purchase amount 121 including the suggested purchase price 122 and the shipping cost 123. Then, the terminal of the purchaser 10 generates the purchase request 12 and transmits the purchase request 12 to the management server 100.

On the other hand, the sales request 22 from the supplier 20 includes a suggested total sales amount 221 including a suggested sales price 222 and a shipping cost 223, a suggested sales quantity 224, and a shipping cost definition 225. In the sales request 22, the shipping cost 223 may be calculated from the shipping cost definition 225 based on the delivery destination information 125 of the purchaser 10.

When the supplier 20 desires to sell a specific product, the supplier 20 specifies the suggested sales price 222 and the suggested sales quantity 224. Then, the terminal of the supplier 20 generates the sales request 22 and transmits the sales request 22 to the management server 100. The management server 100 calculates or evaluates the shipping cost 223 in the sales request 22 for each purchaser 10 who is a candidate for the purchase destination.

The management server 100 compares the suggested total purchase amount 121 of the purchase request 12 from one or more purchasers 10 with the suggested total sales amount 221 of the sales request 22 from one or more suppliers 20 to determine whether or not the conditions of each other match. Alternatively, the management server 100 compares the suggested purchase price 122 of the purchase request 12 from one or more purchasers 10 with the suggested sales price 222 of the sales request 22 from one or more suppliers 20 to determine whether or not the conditions of each other match.

In addition, in the matching processing, if one of the suggested purchase price 122 and the suggested sales price 222 is not a disadvantageous condition, it may be determined that the transaction is completed under the condition that the other one is advantageous. For example, it is assumed that the purchaser 10 sets the suggested purchase price 122 of a certain product to "100 yen" and the supplier 20 sets the suggested sales price 222 of the product to "90 yen". In this case, the suggested purchase price 122 desired by the purchaser 10 may be changed to "90 yen", and then it may be determined that the transaction is completed. In this case, since the purchaser 10 can purchase the product "10 yen" cheaper than the suggested purchase price 122, the transaction is made under favorable conditions.

On the contrary, after changing the suggested sales price 222 desired by the supplier 20 to "100 yen", it may be determined that the transaction is completed. In this case, since the supplier 20 can purchase the product "10 yen" cheaper than the suggested sales price 222, the transaction is made under favorable conditions.

In addition, the suggested purchase price 122 desired by the purchaser 10 may be changed to "95 yen" and the suggested sales price 222 desired by the supplier 20 may be changed to "95 yen", and then it may be determined that the transaction is completed. In this case, for both the purchaser 10 and the supplier 20, the transaction is made under favorable conditions compared to the beginning.

In addition, regarding the quantity, even if only some of the conditions are met, the transaction may be completed, or if the conditions for all the quantities are not met, the transaction may be completed. For example, when the suggested purchase quantity 124 of the purchase request 12 is less than the suggested sales quantity 224 of the sales request 22, the purchaser 10 can purchase only a part of the quantity specified by the suggested purchase quantity 124. If the purchaser 10 allows, the transaction may be completed for only a part of such a specified quantity.

### (c2: User interface screen)

Next, an example of the user interface screen provided in the product transaction system 1 according to the present embodiment will be described.

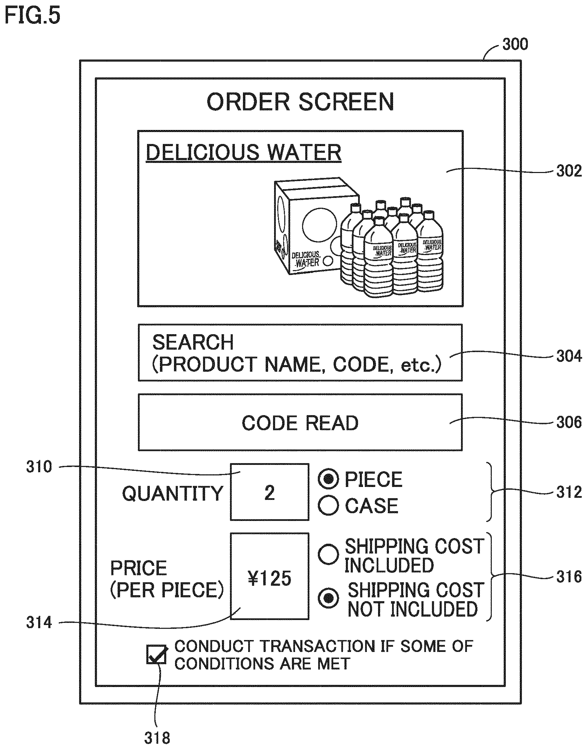

Fig. 5 is a schematic diagram showing an example of a user interface screen 300 provided on the terminal of the purchaser 10 that configures the product transaction system 1 according to the present embodiment. Referring to Fig. 5, the user interface screen 300 receives an instruction to generate the purchase request 12 from the purchaser 10.

More specifically, the user interface screen 300 includes a product display portion 302 showing an image of a product that the purchaser 10 desires to purchase, a search button 304 for searching for the product to be purchased, and a code reading button 306 for reading identification information to identify the product to be purchased.

The purchaser 10 can search for a product to be purchased by selecting the search button 304 and inputting a product name or a code for specifying the product. Alternatively, the purchaser 10 can specify a product to be purchased by selecting the code reading button 306 and reading the barcode or QR code (registered trademark) attached to the product to be purchased with a camera mounted on the terminal or the like.

An image or the like showing the searched or specified product in this manner is displayed on the product display portion 302.

In addition, in order to search for a product and search for an image of the product based on the product name or identification information, a database for product management may be arranged inside or outside the management server 100.

When the purchaser 10 specifies a product to be purchased, the purchaser 10 inputs a suggested purchase price and a suggested purchase quantity. More specifically, the user interface screen 300 includes a quantity input box 310 and a price input box 314.

The purchaser 10 inputs the suggested purchase quantity in the quantity input box 310, and inputs the suggested purchase price in the price input box 314.

According to the selection status of a unit selection radio button 312 for selecting either an individual unit (one unit) or a case unit, the suggested purchase quantity input in the quantity input box 310 is set to either an individual unit or a case unit.

According to the selection status of a shipping cost selection radio button 316 for selecting either shipping cost included or shipping cost not included, the suggested purchase price input in the price input box 314 is set to either the price including the shipping cost or the price not including the shipping cost. If the shipping cost selection radio button 316 is selected to include the shipping cost, the price input in the price input box 314 means the suggested total purchase amount 121, and if the shipping cost selection radio button 316 is selected not to include the shipping cost, the price input in the price input box 314 means the suggested purchase price 122.

In addition, the user interface screen 300 includes a check button 318 for setting whether or not to perform processing as "transaction completed" only for a part of the suggested purchase quantity that meets the conditions when the conditions are met only for a part of the suggested purchase quantity. By selecting the check button 318, it is allowed that the transaction is completed only for a part of the suggested purchase quantity.

The purchase request 12 is generated through the user interface screen 300 shown in Fig. 5.

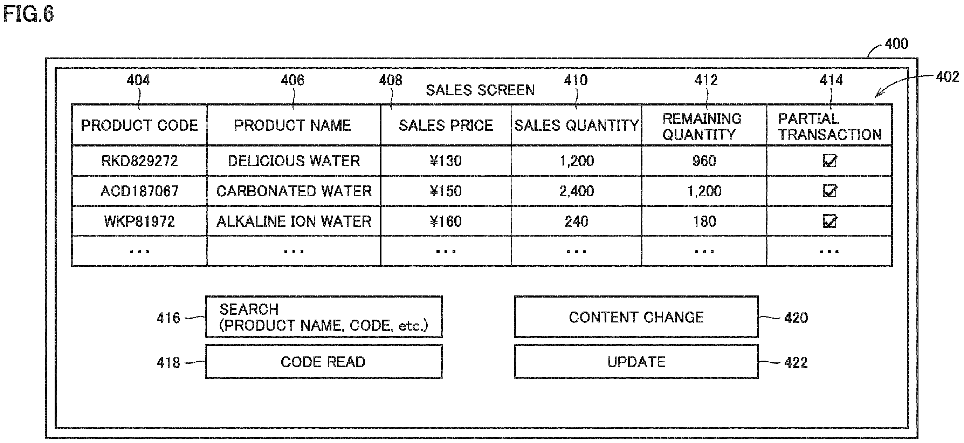

Fig. 6 is a schematic diagram showing an example of a user interface screen provided on the terminal of the supplier 20 that configures the product transaction system 1 according to the present embodiment. Referring to Fig. 6, a user interface screen 400 receives an instruction to generate the sales request 22 from the supplier 20.

More specifically, the user interface screen 400 includes a list 402 showing a list of products that can be sold by the supplier 20. The list 402 includes a product code column 404 indicating a product code for specifying each product that can be sold by the supplier 20, a product name column 406 indicating the product name of each product, a sales price column 408 indicating the suggested sales price of each product, a sales quantity column 410 indicating the suggested sales quantity of each product, a remaining quantity column 412 indicating the quantity for which transactions have not been completed yet of the suggested sales quantity of each product, and a partial transaction column 414 for setting whether or not to perform processing as "transaction completed" only for the quantity that meets the conditions when the conditions are met only for a part of the suggested sales quantity.

The supplier 20 registers products that can be sold in the list 402, and inputs the suggested sales price (sales price column 408) and the suggested sales price (sales quantity column 410) for each product.

The supplier 20 can search for a product that can be sold and register the product in the list 402 by selecting a search button 416 and inputting a product name or a code for specifying the product. Alternatively, the supplier 20 can register a product that can be sold in the list 402 by selecting a code reading button 418 and reading the bar code or QR code attached to the product to be purchased with a camera mounted on the terminal or the like.

The supplier 20 can arbitrarily change the suggested sales price (sales price column 408) and the suggested sales price (sales quantity column 410) registered in the list 402 by selecting a content change button 420. The content changed by the supplier 20 is reflected by selecting an update button 422.

The sales request 22 is generated through the user interface screen 400 shown in Fig. 6.

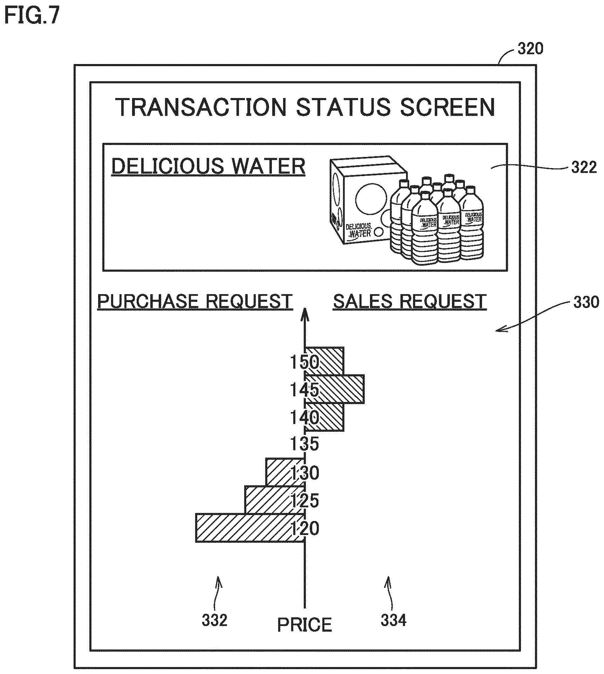

Fig. 7 is a schematic diagram showing an example of a user interface screen 320 provided on the terminal of the purchaser 10 that configures the product transaction system 1 according to the present embodiment. Referring to Fig. 7, the user interface screen 320 shows the status of the purchase request 12 and the sales request 22 received by the management server 100. More specifically, the user interface screen 320 includes a product display portion 322 showing an image of a target product and a status display portion 330 showing a transaction status.

The status display portion 330 includes a purchase request status display portion 332 showing suggested purchase prices and suggested purchase quantities according to the purchase request 12 from one or more purchasers 10 and a sales request status display portion 334 showing suggested sales prices and suggested sales quantities according to the sales request 22 from one or more purchasers 10. In the status display portion 330, the purchase request 12 and the sales request 22 are displayed in a state in which these can be compared with each other. By referring to the status display portion 330, the purchaser 10 and the supplier 20 generates a new purchase request 12 or sales request 22 or updates the content of the purchase request 12 or the sales request 22 already generated.

The status display portion 330 of the user interface screen 320 is typically generated based on the content of the purchase request 12 and the sales request 22 temporarily stored in the request queue 116 (Fig. 3) of the management server 100.

### (c3: User management)

Next, user management in the management server 100 of the product transaction system 1 will be described.

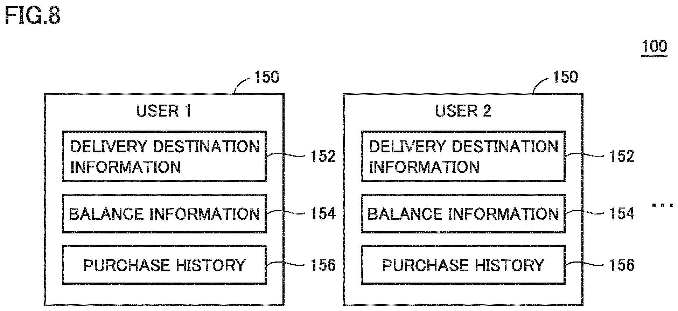

Fig. 8 is a diagram for explaining a method of managing information regarding the purchaser 10 by the management server 100 of the product transaction system 1 according to the present embodiment. Referring to Fig. 8, the management server 100 has management information 150 for managing each purchaser 10.

The management information 150 includes delivery destination information 152 indicating the delivery destination (address or latitude and longitude) of the purchaser 10. The delivery destination information 152 included in the management information 150 may be used as the delivery destination information 125 of the purchase request 12. However, the delivery destination information 125 of the purchase request 12 may be generated each time by using the position information from the GPS (Global Positioning System) or the like mounted on the terminal of the purchaser 10. In this case, the delivery destination information 152 does not necessarily need to be included in the management information 150.

The management information 150 includes balance information 154 indicating the account balance of the purchaser 10. The balance information 154 embodies an account for managing the economic value that is held by each of the purchaser 10 and the supplier 20. The economic value is assumed to be the amount of money in a specific currency, but may be something like a virtual currency or may be a unique point used in the product transaction system 1.

When the purchaser 10 generates the purchase request 12, the management server 100 reserves a planned purchase amount, which is determined based on the purchase request 12, from the corresponding balance information 154. That is, the management server 100 reserves a value, which is determined based on the suggested purchase price included in the purchase request 12, from the account of the corresponding purchaser 10.

The management information 150 includes a purchase history 156 indicating the transaction information of the purchaser 10. The management server 100 updates the content of the purchase history 156 each time a transaction is completed. In addition, each time the purchaser 10 generates the purchase request 12, the management server 100 may reflect the content in the balance information 154.

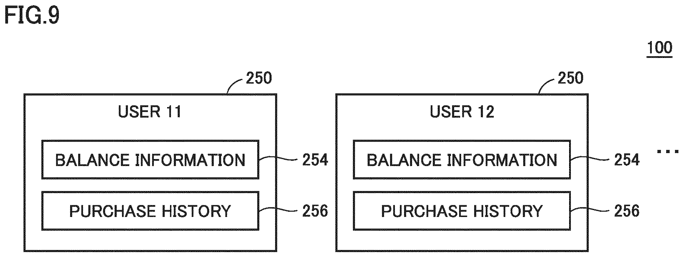

Fig. 9 is a diagram for explaining a method of managing information regarding the supplier 20 by the management server 100 of the product transaction system 1 according to the present embodiment. Referring to Fig. 9, the management server 100 has management information 250 for managing each supplier 20.

The management information 250 includes balance information 254 indicating the account balance of the supplier 20. When a transaction between the purchaser 10 and the supplier 20 is completed, the management server 100 adds the amount of money exchanged by the transaction to the corresponding balance information 254.

The management information 250 includes a sales history 256 indicating the transaction information of the supplier 20. The management server 100 updates the content of the sales history 256 each time a transaction is completed.

The management server 100 manages the information of the purchaser 10 and the supplier 20 regarding the transaction by using the management information 150 shown in Fig. 8 and the management information 250 shown in Fig. 9.

### (c4: Shipping cost calculation)

Next, an example of a method of calculating the shipping cost (the shipping cost 123 included in the purchase request 12 and the shipping cost 223 included in the sales request 22) will be described.

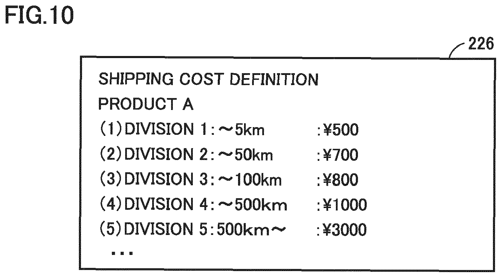

Fig. 10 is a diagram showing an example of a shipping cost definition 226 used in the product transaction system 1 according to the present embodiment. The shipping cost definition 226 shown in Fig. 10 defines a shipping cost for each product ("product A" in the example of Fig. 10). In the shipping cost definition 226, the distance between the purchaser 10 and the supplier 20 is divided (divisions 1 to 5), and the shipping cost is defined for each division. When it is necessary to calculate the shipping cost in the purchase request 12 or the sales request 22, the shipping cost is determined with reference to the delivery destination information of the purchaser 10 and the shipping cost definition 226.

The shipping cost definition 226 shown in Fig. 10 may be used as the shipping cost definition 225 of the sales request 22.

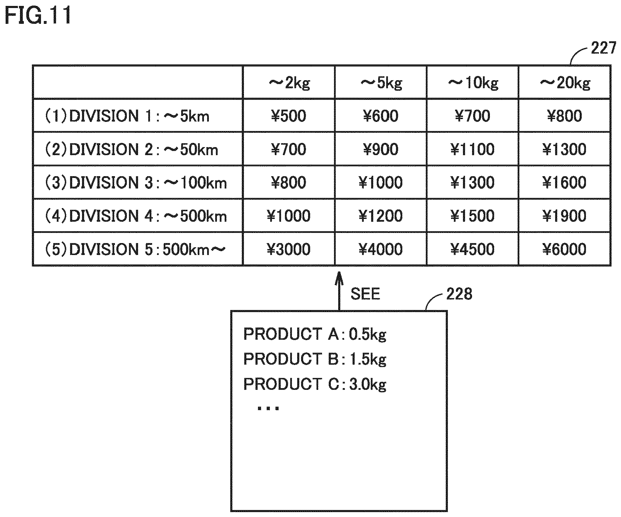

Fig. 11 is a diagram showing another example of a shipping cost definition 227 used in the product transaction system 1 according to the present embodiment. The shipping cost definition 227 shown in Fig. 11 basically defines shipping costs for all products. In the shipping cost definition 227, the distance between the purchaser 10 and the supplier 20 is divided (divisions 1 to 5), and the shipping cost is defined for each division.

When it is necessary to calculate the shipping cost for any of the products, the weight of each product is determined with reference to a weight table 228 showing the weight of each product, and the determined weight is applied to the shipping cost definition 227 to determine the shipping cost.

In addition, although Figs. 10 and 11 show examples in which the distance between the purchaser 10 and the supplier 20 is divided and the shipping cost is defined for each division, the shipping cost may be defined per unit distance (for example, 1 km) without being limited thereto. In addition, domestic and overseas shipping cost definitions may be specified.

As described above, in the product transaction system 1 according to the present embodiment, the required shipping cost can be calculated by using the shipping cost definition as described above. That is, the management server 100 may calculate the shipping cost for delivering a particular product based on the shipping cost definition associated with the supplier 20 or the particular product and the distance between the purchaser 10 and the supplier 20.

### (c5: Processing procedure)

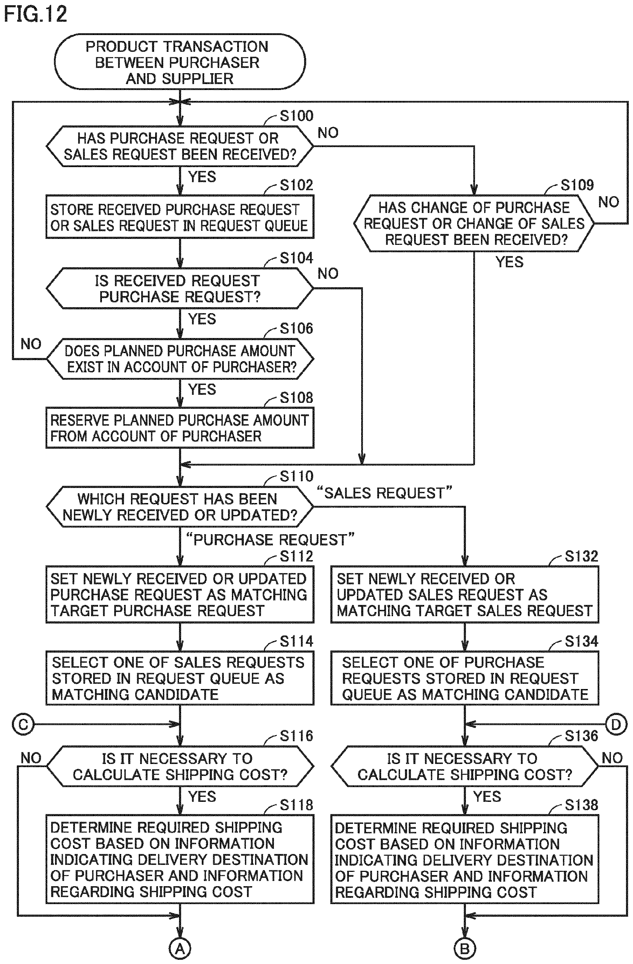

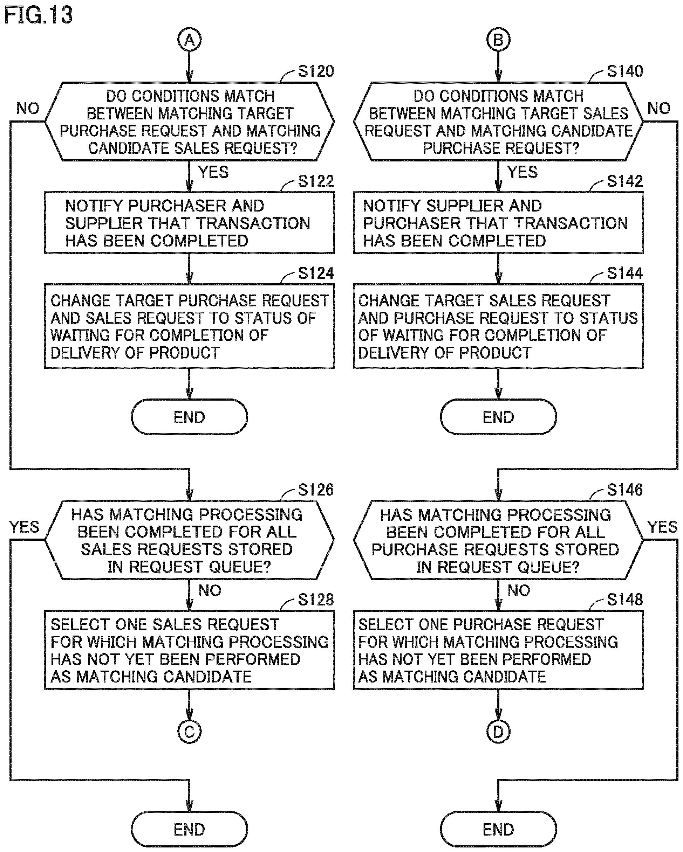

Next, an example of a processing procedure in the management server 100 of the product transaction system 1 will be described. Figs. 12 and 13 are flowcharts showing the processing procedure in the management server 100 of the product transaction system 1 according to the present embodiment. Figs. 12 and 13 show a product transaction method in which a computer executes a product transaction between the purchaser 10 and the supplier 20.

Each step shown in Figs. 12 and 13 is typically realized by the processor 101 of the management server 100 executing the matching program 112 and the payment program 114 (corresponding to a product transaction program).

Referring to Figs. 12 and 13, the management server 100 determines whether or not the purchase request 12 from the terminal of the purchaser 10 or the sales request 22 from the supplier 20 has been received (step S100). If the purchase request 12 from the terminal of the purchaser 10 or the sales request 22 from the supplier 20 has been received (YES in step S100), the management server 100 stores the received purchase request 12 or sales request 22 in the request queue 116 (step S102).

As described above, the management server 100 executes processing for receiving the purchase request 12 including the suggested purchase price of the specific product from the purchaser 10 and processing for receiving the sales request 22 including the suggested sales price of the specific product from the supplier 20.

Then, the management server 100 determines whether or not the received request is the purchase request 12 (step S104). If the received request is the purchase request 12 (YES in step S104), the management server 100 determines whether or not the planned purchase amount determined based on the suggested purchase price and the suggested purchase quantity included in the received purchase request 12 exists in the account of the purchaser 10 who has transmitted the purchase request 12 (step S106).

If the planned purchase amount exists in the account of the purchaser 10 (YES in step S106), the management server 100 reserves the planned purchase amount from the account of the purchaser 10 (step S108). Then, matching processing of step S110 and steps subsequent thereto is executed.

If the planned purchase amount does not exist in the account of the purchaser 10 (NO in step S106), the management server 100 does not execute the matching processing of step S110 and steps subsequent thereto. At this time, the management server 100 may notify the terminal of the purchaser 10 that the purchase request 12 cannot be generated.

If the received request is the sales request 22 (NO in step S104), the processes of steps S106 and S108 are skipped.

If the purchase request 12 from the terminal of the purchaser 10 or the sales request 22 from the supplier 20 has not been received (NO in step S100), the management server 100 determines whether or not the change of the purchase request 12 from the terminal of the purchaser 10 or the change of the sales request 22 from the supplier 20 has been received (step S109). If the change of the purchase request 12 from the terminal of the purchaser 10 or the change of the sales request 22 from the supplier 20 has been received (YES in step S100), the matching processing of step S110 and steps subsequent thereto is executed.

If neither the change of the purchase request 12 from the terminal of the purchaser 10 nor the change of the sales request 22 from the supplier 20 has been received (NO in step S100), the processes of step S110 and steps subsequent thereto are repeated.

Thus, when the purchase request 12 or the sales request 22 is added to the request queue 116 or when the purchase request 12 or the sales request 22 stored in the request queue 116 is changed, processing for determining whether or not the purchase request 12 and the sales request 22 match is executed.

If the change of the purchase request 12 from the terminal of the purchaser 10 and the change of the sales request 22 from the supplier 20 have not been received (NO in step S100), the processes of step S110 and steps subsequent thereto are repeated.

The management server 100 determines whether the newly received or updated request is the purchase request 12 or the sales request 22 (step S110).

If the newly received or updated request is the purchase request 12 ("purchase request" in step S110), the management server 100 sets the newly received or updated purchase request 12 as the matching target purchase request 12 (step S112), and selects one of the sales requests 22 stored in the request queue 116 as a matching candidate (step S114).

Then, the management server 100 determines whether or not it is necessary to calculate the shipping cost for the matching target purchase request 12 or the matching candidate sales request 22 (step S116). If it is necessary to calculate the shipping cost for the matching target purchase request 12 or the matching candidate sales request 22 (YES in step S116), the management server 100 determines the required shipping cost (shipping cost 123 or shipping cost 223) based on information indicating the delivery destination of the purchaser 10 (delivery destination information 125 or delivery destination information 152) and information regarding the shipping cost (shipping cost definition 225 or shipping cost definition 226) (step S118).

In this manner, the management server 100 determines whether or not the purchase request 12 and the sales request 22 match after reflecting the shipping cost for delivering the specific product from the supplier 20 to the purchaser 10.

On the other hand, if it is not necessary to calculate the shipping cost for the matching target purchase request 12 or the matching candidate sales request 22 (NO in step S116), the process of step S118 is skipped.

Then, the management server 100 compares the matching target purchase request 12 and the matching candidate sales request 22 with each other to determine whether or not the conditions of each other match (step S120) .

If the conditions of the matching target purchase request 12 and the matching candidate sales request 22 match (YES in step S120), the management server 100 determines that the transaction has been completed, provides notification to the purchaser 10 and the supplier 20 corresponding to the target purchase request 12 and sales request 22 (step S122), and changes the target purchase request 12 and sales request 22 to the status of waiting for the completion of delivery of the target product (step S124). Then, the matching processing ends.

If the conditions of the matching target purchase request 12 and the matching candidate sales request 22 do not match (NO in step S120), the management server 100 determines whether or not the matching processing has been completed for all the sales requests 22 stored in the request queue 116 (step S126). If the matching processing for any of the sales requests 22 stored in the request queue 116 has not been performed (NO in step S126), the management server 100 selects one sales request 22 for which matching processing has not yet been performed as a matching candidate (step S128), and repeats the processes of step S116 and steps subsequent thereto.

On the other hand, if the matching processing for all the sales requests 22 stored in the request queue 116 has been completed (YES in step S126), the management server 100 determines that the purchase request 12 and the sales request 22 whose conditions match each other have not been found, and ends the matching processing.

On the other hand, if the newly received or updated request is the sales request 22 ("sales request" in step S110), the management server 100 sets the newly received or updated sales request 22 as the matching target sales request 22 (step S132), and selects one of the purchase requests 12 stored in the request queue 116 as a matching candidate (step S134).

Then, the management server 100 determines whether or not it is necessary to calculate the shipping cost for the matching target sales request 22 or the matching candidate purchase request 12 (step S136). If it is necessary to calculate the shipping cost for the matching target sales request 22 or the matching candidate purchase request 12 (YES in step S136), the management server 100 determines the required shipping cost (shipping cost 123 or shipping cost 223) based on information indicating the delivery destination of the purchaser 10 (delivery destination information 125 or delivery destination information 152) and information regarding the shipping cost (shipping cost definition 225 or shipping cost definition 226) (step S138).

In this manner, the management server 100 determines whether or not the purchase request 12 and the sales request 22 match after reflecting the shipping cost for delivering the specific product from the supplier 20 to the purchaser 10.

On the other hand, if it is not necessary to calculate the shipping cost for the matching target sales request 22 or the matching candidate purchase request 12 (NO in step S136), the process of step S138 is skipped.

Then, the management server 100 compares the matching target sales request 22 or the matching candidate purchase request 12 with each other to determine whether or not the conditions of each other match (step S140).

If the conditions of the matching target sales request 22 and the matching candidate purchase request 12 match (YES in step S140), the management server 100 determines that the transaction has been completed, provides notification to the supplier 20 and the purchaser 10 corresponding to the target sales request 22 and purchase request 12 (step S142), and changes the target sales request 22 and purchase request 12 to the status of waiting for the completion of delivery of the target product (step S144). Then, the matching processing ends.

If the conditions of the matching target sales request 22 and the matching candidate purchase request 12 do not match (NO in step S140), the management server 100 determines whether or not the matching processing has been completed for all the purchase requests 12 stored in the request queue 116 (step S146). If the matching processing for any of the purchase requests 12 stored in the request queue 116 has not been performed (NO in step S146), the management server 100 selects one purchase request 12 for which matching processing has not yet been performed as a matching candidate (step S148), and repeats the processes of step S136 and steps subsequent thereto.

On the other hand, if the matching processing for all the purchase requests 12 stored in the request queue 116 has been completed (YES in step S146), the management server 100 determines that the sales request 22 and the purchase request 12 whose conditions match each other have not been found, and ends the matching processing.

### <D. Product management>

An example of product management in the product transaction system 1 according to the present embodiment will be described.

### (d1: Identification information)

A product handled in the product transaction system 1 may be specified by using the identification information attached to the package or the like. As such identification information, for example, a product identification number such as a JAN (Japanese Article Number) code, an EAN (European Article Number) code, GTIN-13, or GTIN-8, may be used. By using such a product identification number, it is possible to facilitate the handling of products distributed between a plurality of countries.

In addition, identification information for collective packaging may be used. The identification information for collective packaging includes a product identification number set for collective packaging (case, cardboard, pallet, and the like) that is a transaction unit between companies. As such identification information for collective packaging, a product code for collective packaging such as GTIN-14 is known. Since the product code for collective packaging includes the product identification number for each of products that have been collectively packaged, the product transaction system 1 can handle individual products and can handle these collectively.

In addition, the product code for collective packaging can be embodied as a barcode symbol such as an ITF (Inter-Leaved two of Five) symbol.

By using the identification information indicating individual products and the identification information for collective packaging in combination as described above, a more flexible transaction can be realized according to the characteristics of the product or the circumstances of the supplier 20.

### (d2: Meta product)

In the product transaction system 1 according to the present embodiment, a plurality of products of the same type may be collectively handled as one product. Such a product is also called a "meta product".

For example, as for "water", various products are provided, but some purchasers 10 do not specify a specific producer and product and simply desire to purchase "water".

Therefore, for example, a meta product that defines a comprehensive product type may be specified without specifying a product such as "water in a 1-liter PET container".

By storing correspondence information as to which product is included in such a meta product in the management server 100, the purchaser 10 can order "water in a 1-liter PET container" (regardless of which product this is) .

On the other hand, since the supplier 20 can provide an arbitrary product as long as the meta product corresponds to the requested product type, inventory disposal and the like can be done more easily.

In addition, what kind of products are included in each meta product may be managed on the management server 100 side. Alternatively, the conditions that can be included in each meta product may be specified, and a product may be sold as a meta product according to the conditions on the supplier 20 side. When the meta product is managed on the management server 100 side, a table in which the product identification number indicating the meta product is associated with the product identification number indicating each of specific one or more products included in the meta product may be stored.

By making the meta product available in this manner, a more flexible product transaction can be realized.

### <E. Variations of purchase request 12 and sales request 22>

In the above description, the matching processing for comparing the suggested total purchase amount 121 (including the suggested purchase price 122 and the shipping cost 123) included in the purchase request 12 with the suggested total sales amount 221 (including the suggested sales price 222 and the shipping cost 223) included in the sales request 22 has been exemplified, but additional conditions may be included for the purchase request 12 and the sales request 22 without being limited thereto. Hereinafter, some variations will be described.

### (e1: Price specification option)

Figs. 5 and 6 show an example in which the user inputs a specific suggested purchase price or suggested sales price, but the price may be specified according to the transaction status (see Fig. 7 and the like) without being limited thereto.

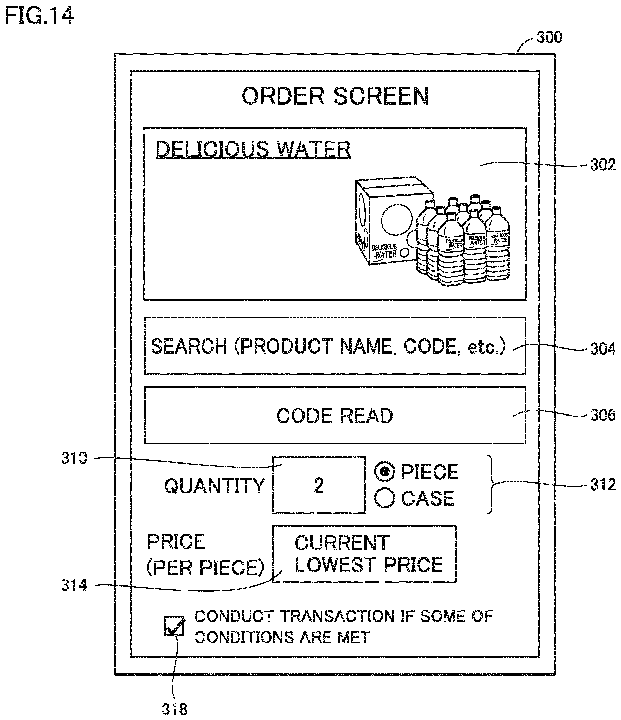

Fig. 14 is a schematic diagram showing another example of the user interface screen 300 provided on the terminal of the purchaser 10 that configures the product transaction system 1 according to the present embodiment. In the user interface screen 300 shown in Fig. 14, an example is shown in which the "current lowest price" is specified in the price input box 314.

The "current lowest price" of the purchase request 12 means the lowest price of the suggested total sales amount 221 and the suggested sales price 222 included in the sales request 22, for which the transaction has not been completed, in the transaction status shown in Fig. 7. When the "current lowest price" is specified as such a suggested purchase price, if there are enough suggested sales quantities satisfying the suggested purchase quantity, the transaction is completed immediately.

On the contrary, the "current highest price" may be specified when the sales request 22 is generated. In this case, the "current highest price" means the highest price of the suggested total purchase amount 121 and the suggested purchase price 122 included in the purchase request 12, for which the transaction has not been completed, in the transaction status shown in Fig. 7. When the "current highest price" is specified as such a suggested sales price, if there are enough suggested purchase quantities satisfying the suggested sales quantity, the transaction is completed immediately.

In addition, it is also possible to specify "5 yen higher than the current lowest price", "5 yen lower than the current highest price", and the like in addition to the specification of "current lowest price" or "current highest price".

In addition, the suggested purchase price and the suggested sales price may be specified in any form without being limited to the example described above.

By enhancing the price specification options for the suggested purchase price and the suggested sales price as described above, the purchaser 10 and the supplier 20 can enjoy a flexible transaction according to the transaction situation.

### (e2: Collective packaging option)

As described above, the supplier 20 often provides products to the purchaser 10 in the form of a collective package in which the products are grouped in transaction units (for example, a form in which 12 products are packaged in one cardboard). In such a case, the collective package can be sold as one unit, or the individual products contained in the collective package can be sold.

In response to such needs, when generating the sales request 22, whether to sell the collective package only in one unit or to allow the products contained in the collective package to be sold individually may be selectable.

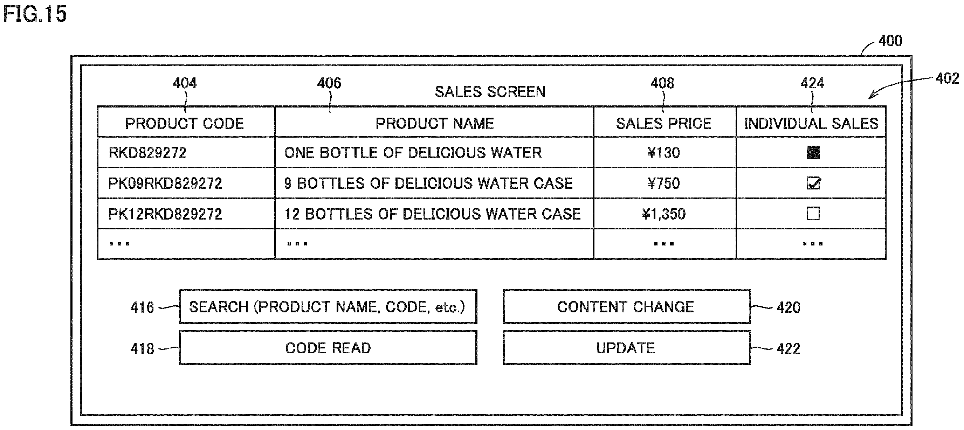

Fig. 15 is a schematic diagram showing another example of the user interface screen provided on the terminal of the supplier 20 that configures the product transaction system 1 according to the present embodiment. For products that are collectively packaged in transaction units, on the user interface screen 400 shown in Fig. 15, the supplier 20 may receive the selection of whether to sell the collective package only in one unit or to allow the products contained in the collective package to be sold individually (individual sales column 424).

The management server 100 determines whether or not the conditions between the purchase request 12 and the sales request 22 match each other in consideration of the request from the supplier 20 for such collective packaging.

In addition, the shipping cost may be different between the case where the collective package is sold as one unit and the case where the collective package is separated into individual products and sold. Usually, the shipping cost when the collective package is separated into individual products and sold is set to be higher than the shipping cost when the collective package is sold as one unit. By setting such different shipping costs, it is possible to increase the incentive to sell the collective package as one unit.

### (e3: Expiration date option)

The purchaser 10 and the supplier 20 may arbitrarily cancel or withdraw the purchase request 12 and the sales request 22 before the transaction is completed. In addition, depending on the characteristics of the product, it may be necessary to purchase or sell the product by a specific deadline.

In consideration of such needs, the expiration date may be set for the purchase request 12 and the sales request 22. More specifically, when generating the arbitrary purchase request 12 and the arbitrary sales request 22, the purchaser 10 and the supplier 20 may add a deadline (expiration date condition) for canceling or withdrawing the request if the transaction is not completed.

For the purchase request 12 and the sales request 22 having the specified expiration date, the management server 100 forcibly cancels the corresponding purchase request 12 or the sales request 22 if the transaction is not completed even after the specified expiration date has arrived. By adding such an expiration date condition to the purchase request 12 or the sales request 22, it is possible to avoid a situation in which the transaction is completed late.

As a method of specifying the expiration date, any method such as a specific date, a specific date and time, today, this week, and this month may be adopted.

### (e4: Stock availability option)

The supplier 20 is scheduled to supply a specific product at all times, but there is a possibility that the product cannot be supplied temporarily for some reason. In such a case, as soon as the product arrives, the product is delivered to the purchaser 10, but the purchaser 10 has to wait until the product arrives.

Therefore, when the purchaser 10 generates the purchase request 12, the condition regarding whether or not the specified product is in stock may be added. More specifically, the purchaser 10 may be able to select whether to complete the transaction only when the supplier 20 has the inventory or to complete the transaction even if the supplier 20 does not have the inventory.

In a case where completing the transaction only when the supplier 20 has the inventory is set as the condition, the transaction is completed only when the specified product exists in the inventory of the supplier 20.

On the other hand, in a case where completing the transaction even if the supplier 20 does not have the inventory is specified, the supplier 20 may present the time until the target product arrives to the purchaser 10.

### (e5: Delivery start deadline option)

The purchaser 10 may desire to obtain a certain product as soon as possible. Therefore, when the purchaser 10 generates the purchase request 12, the deadline for the specified product to be delivered from the supplier 20 may be added as the conditions. More specifically, the purchaser 10 may be able to specify the time until the product is delivered after the transaction is completed (for example, within six hours after the transaction is completed) or the deadline for delivery of the product (for example, 15:00 on October 1st).

When the purchase request 12 to which such a condition is added is generated, the management server 100 receives information, such as the delivery time, from the supplier 20 and determines whether or not the conditions between the purchase request 12 and the sales request 22 match each other.

### (e6: Deliverable range option)

Depending on the business scale of the supplier 20, the range in which products can be delivered may be limited. In consideration of such a limitation of the delivery range, when the supplier 20 generates the sales request 22, the range in which products can be delivered may be specified in advance. More specifically, the supplier 20 may be able to specify a range in which products can be delivered (for example, only in Japan or within 500 km).

When the sales request 22 to which such a condition is added is generated, the management server 100 determines whether or not the conditions between the purchase request 12 and the sales request 22 match each other by referring to the delivery destination information of the purchaser 10 (information indicating the position of the purchaser 10).

In addition, when the purchaser 10 generates the purchase request 12, if it is clear that the purchase request 12 does not meet the conditions of the deliverable range specified in advance by the supplier 20, the sales request 22 that does not meet the conditions may be hidden from the purchaser 10.

### (e7: Qualification check)

Depending on products to be transacted (for example, alcohol, tobacco, and medicine), it may be necessary to ensure that the purchaser 10 has predetermined qualifications. For this reason, the management server 100 may hold the attribute information (age and the like) of the purchaser 10 in advance and determine whether or not the conditions between the purchase request 12 and the sales request 22 match each other by also referring to the attribute information.

Regarding the attribute information of the purchaser 10, the purchaser 10 may transmit an image of a driver's license or the like to the management server 100 in advance, and the attribute information of the purchaser 10 may be generated based on the transmitted image.

By checking the qualifications of the purchaser 10, a proper and legal transaction can be realized.

### (e8: Volume discount)

In the transaction of products in the product transaction system 1, when a larger number of products than a predetermined number are purchased, the price of the product may be lowered. In this case, when the supplier 20 generates the sales request 22, the number of products sold and the discount rate (discount rate) may be added as the conditions.

In the matching processing, the management server 100 may determine the price of the product according to the specified discount rate when a number of product transactions equal to or greater than the specified number of sales are completed.

### <H. Other forms>

### (fl: Account)

In the product transaction system 1, international product transactions are also possible. In such a case, the user's account may be unified in a specific currency (for example, Japanese yen or US dollar), or the user may select a specific currency from a plurality of currencies. When a transaction is conducted between accounts of different currencies, money may be exchanged between the accounts in consideration of the exchange rate at the time of the transaction.

Alternatively, each user's account may be managed by using any virtual currency. By using a common virtual currency, conversion processing based on the exchange rate can be omitted.

### (f2: Distributed arrangement)

In the above description, an example is shown in which the management server 100 executes the matching processing and the payment processing. However, each process may be implemented on a different server, or may be implemented by using a plurality of management servers 100. For example, by preparing the management server 100 for each country or region and linking the management servers 100 with each other, it is possible to realize international product transactions.

### <G. Advantages>

According to the product transaction system 1 according to the present embodiment, the purchaser 10 and the supplier 20 generate the purchase request 12 and the sales request 22, respectively, and the management server 100 determines the matching between the purchase request 12 and the sales request 22. Then, when it is determined that the purchase request 12 and the sales request 22 match each other, the product is delivered from the supplier 20 to the purchaser 10, and money is transferred to the account of the supplier 20 when the delivery of the product is completed. By introducing such an electronic trading mechanism, direct transactions of products between the producer and the purchaser 10 is possible.

It should be considered that the embodiment disclosed is an example in all points and not restrictive. The scope of the present invention is defined by the claims rather than the above description, and is intended to include all modifications within the scope and meaning equivalent to the claims.

### EXPLANATIONS OF LETTERS OR NUMERALS

- 1: PRODUCT TRANSACTION SYSTEM
- 10: PURCHASER
- 12: PURCHASE REQUEST
- 20: SUPPLIER
- 22: SALES REQUEST
- 30: DELIVERER
- 100: MANAGEMENT SERVER
- 101: PROCESSOR
- 102: MAIN MEMORY
- 103: COMMUNICATION INTERFACE
- 104: INPUT UNIT
- 105: DISPLAY
- 106: INTERNAL BUS
- 110: STORAGE
- 112: MATCHING PROGRAM
- 114: PAYMENT PROGRAM
- 116: REQUEST QUEUE
- 118: USER INFORMATION
- 121: SUGGESTED TOTAL PURCHASE AMOUNT
- 122: SUGGESTED PURCHASE PRICE
- 123, 223: SHIPPING COST
- 124: SUGGESTED PURCHASE QUANTITY
- 125, 152: DELIVERY DESTINATION INFORMATION
- 126: SYSTEM USAGE FEE
- 150, 250: MANAGEMENT INFORMATION
- 154, 254: BALANCE INFORMATION
- 156: PURCHASE HISTORY
- 221: SUGGESTED TOTAL SALES AMOUNT
- 222: SUGGESTED SALES PRICE
- 224: SUGGESTED SALES QUANTITY
- 225, 226, 227: SHIPPING COST DEFINITION
- 228: WEIGHT TABLE
- 256: SALES HISTORY
- 300, 320, 400: USER INTERFACE SCREEN
- 302, 322: PRODUCT DISPLAY PORTION
- 304, 416: SEARCH BUTTON
- 306, 418: BUTTON
- 310: QUANTITY INPUT BOX
- 312: UNIT SELECTION RADIO BUTTON
- 314: PRICE INPUT BOX
- 316: SHIPPING COST SELECTION RADIO BUTTON
- 318: CHECK BUTTON
- 330: STATUS DISPLAY PORTION
- 332: PURCHASE REQUEST STATUS DISPLAY PORTION
- 334: SALES REQUEST STATUS DISPLAY PORTION
- 402: LIST
- 404: PRODUCT CODE COLUMN
- 406: PRODUCT NAME COLUMN
- 408: SALES PRICE COLUMN
- 410: SALES QUANTITY COLUMN
- 412: REMAINING QUANTITY COLUMN
- 414: PARTIAL TRANSACTION COLUMN
- 420: CONTENT CHANGE BUTTON
- 422: UPDATE BUTTON
- 424: INDIVIDUAL SALES COLUMN

## Claims

1. A product transaction system for conducting a product transaction between a purchaser and a supplier, comprising:
a first receiving means for receiving a purchase request including a suggested purchase price of a specific product from the purchaser;
a second receiving means for receiving a sales request including a suggested sales price of the specific product from the supplier; and
a determination means for determining whether or not the purchase request and the sales request match each other after reflecting a shipping cost for delivering the specific product from the supplier to the purchaser.

2. The product transaction system according to claim 1, further comprising:
a request queue for temporarily storing the one or more purchase requests and the one or more sales requests,
wherein the determination means determines whether or not the purchase request and the sales request match each other when the purchase request or the sales request is added to the request queue or when the purchase request or the sales request stored in the request queue is changed.

3. The product transaction system according to claim 1 or 2, further comprising:
a calculation means for calculating a shipping cost for delivering the specific product based on a shipping cost definition associated with the supplier or the specific product and a distance between the purchaser and the supplier.

4. The product transaction system according to any one of claims 1 to 3, further comprising:
an account for managing an economic value held by each of the purchaser and the supplier,
wherein the first receiving means reserves a value determined based on a suggested purchase price included in the purchase request from a corresponding purchaser's account.

5. The product transaction system according to claim 4, further comprising:
a means for collecting a usage fee from the purchaser's account corresponding to the purchase request when a product transaction based on the purchase request and the sales request matching each other is completed.

6. A product transaction method in which a computer executes a product transaction between a purchaser and a supplier, comprising:
a step of receiving a purchase request including a suggested purchase price of a specific product from the purchaser;
a step of receiving a sales request including a suggested sales price of the specific product from the supplier; and
a step of determining whether or not the purchase request and the sales request match each other after reflecting a shipping cost for delivering the specific product from the supplier to the purchaser.

7. A product transaction program for causing a computer to execute a product transaction between a purchaser and a supplier, the product transaction program causing the computer to execute: a step of receiving a purchase request including a suggested purchase price of a specific product from the purchaser;
a step of receiving a sales request including a suggested sales price of the specific product from the supplier; and
a step of determining whether or not the purchase request and the sales request match each other after reflecting a shipping cost for delivering the specific product from the supplier to the purchaser.
